# EUROPEAN PATENT APPLICATION

(11) **EP 4 575 764 A1**
(43) Date of publication of application: **25.06.2025**
(21) Application number: 23220144.2
(22) Date of filing: 22.12.2023
(51) Int. Cl.: G06F 8/41

(54) **PROGRAM AUGMENTATION FOR UNCERTAINTY TRACKING**

(71) Applicant: Signaloid Limited, Cambridge Cambridgeshire CB1 2GE (GB)
(72) Inventor: Stanley-Marbell, Phillip, Cambridge (GB); Plevris, Angelos, Alimos (GR)
(74) Representative: Legl, Stefan

(57) **Abstract**

The present disclosure relates to a computer-implemented method for program augmentation is provided. The method includes transforming, by one or more processors, a first program representation to a second program representation, the second program representation being configured to perform uncertainty tracking on uncertainty information contained in input data to be processed by the second program representation-

## Description

### FIELD

The present disclosure relates to a computer-implemented method for program augmentation, a computer program comprising instructions for carrying out the computer-implemented method for program augmentation, a computer-readable storage medium comprising instructions for carrying out the computer-implemented method for program augmentation, and a data processing system for program augmentation. More particularly, the present disclosure relates to uncertainty tracking by binary translation and program augmentation.

### BACKGROUND

Nowadays, computers are used for data processing in almost every aspect of life. Data that can be processed by computers may include, but are not limited to, readings from sensors, stock market data, or measurements of the output of a quantum computer. While uncertainties in such data are commonplace, conventional computing platforms can only deal with integer and floating-point values which are certain and unambiguous. Therefore, conventional computing platforms often attempt to eliminate the uncertainties by averaging the variations across readings into a single number so that operations such as ADD, SUBSTRACT, MULTIPLY, XOR, etc. can be performed on these data. The results of these operations are other integers or floating-point values.

In many use cases, the accuracy of the processing results is critical. For example, the sensor data feeding an autonomous control algorithm of a self-driving car contains variations across the vehicle's sensors. The quality of the autonomous control algorithm's decision making may depend on the accuracy of the processing results. For example, if the autonomous control algorithm must perform an emergency stop, the uncertainties in the sensor data may affect whether the emergency stop is performed in a safe manner. Because computers today can only perform calculations on numbers as opposed to being able to perform calculations on uncertainty distributions, the accuracy of the processing results may be insufficient, at least for some applications.

### SUMMARY

In light of the above, a computer-implemented method for program augmentation, a computer program comprising instructions for carrying out the computer-implemented method for program augmentation, a computer-readable storage medium comprising instructions for carrying out the computer-implemented method for program augmentation, and a data processing system for program augmentation are provided.

It is an object of the present disclosure to be able to perform calculations on uncertainty distributions, particularly without providing dedicated hardware. Another object of the present disclosure is to minimize the time and resources required for calculations on uncertainty distributions.

The objects are solved by the features of the independent claims. Preferred embodiments are defined in the dependent claims.

According to an independent aspect of the present disclosure, a computer-implemented method for program augmentation is provided. The method includes transforming, by one or more processors, a first program representation to a second program representation, the second program representation being configured to perform uncertainty tracking on uncertainty information contained in input data to be processed by the second program representation.

According to some embodiments, which can be combined with other embodiments described herein, the uncertainty information includes, or relates to, uncertainty distribution information and/or a probability distribution. A probability distribution is generally understood as a phenomenon in terms of its sample space and the probabilities of events.

According to some embodiments, which can be combined with other embodiments described herein, the input data to be processed by the second program representation are based on a set of empirical samples or an analytic distribution or a set of sensor readings.

According to some embodiments, which can be combined with other embodiments described herein, transforming a first program representation to a second program representation includes passing an intermediate program representation, which is based on the first program representation, through a transformation module to generate the second program representation.

According to some embodiments, which can be combined with other embodiments described herein, the transformation module is configured to add uncertainty tracking functionalities to the intermediate program representation.

According to some embodiments, which can be combined with other embodiments described herein, the transformation module is configured to add the uncertainty tracking functionalities to the intermediate program representation at least by generating function calls to a runtime library containing functions for operations on the uncertainty information contained in the input data.

According to some embodiments, which can be combined with other embodiments described herein, uncertainty tracking functionalities include one or more operations. Preferably, the one or more operations are performed on distributional values. Preferably, the one or more operations include arithmetic operations, more preferably addition, subtraction, multiplication, division and/or exponentiation, or other such operations typically contained in the instruction set of a microprocessor. Preferably, uncertainty tracking functionalities include one or more operations performed on uncertainty information.

According to some embodiments, which can be combined with other embodiments described herein, the transformation module is configured to generate a bitcode file (or LLVM IR file) when adding the uncertainty tracking functionalities to the intermediate program representation.

According to some embodiments, which can be combined with other embodiments described herein, the method further includes transforming the first program representation to the intermediate program representation using a compiler.

Preferably, the compiler generates a plurality of files from the first program representation, and all of the plurality of files are linked to a single file corresponding to the intermediate program representation.

Preferably, the compiler includes, or is based on, a Low Level Virtual Machine, LLVM, and the single file is a single LLVM file, in particular a single LLVM IR file.

Preferably, the compiler includes, or is based on, Multi-Level Intermediate Representation, MLIR.

Preferably, the compiler includes, or is based on, GNU Compiler Collection GIMPLE, GCC GIMPLE.

Preferably, the compiler includes, or is based on, GNU Compiler Collection Register Transfer Language, GCC RTL.

Preferably, the compiler includes, or is based on, an assembly language.

According to some embodiments, which can be combined with other embodiments described herein, the transformation module is provided as an LLVM transformation pass.

According to some embodiments, which can be combined with other embodiments described herein, the LLVM transformation pass is configured to transform LLVM IR by adding the uncertainty tracking functionalities to the LLVM IR to account for uncertainty tracking of the input data.

According to some embodiments, which can be combined with other embodiments described herein, the method further includes generating an uncertainty memory containing memory information about uncertainty distributions.

Preferably, the memory information includes a memory position of a non-distributional value and a memory position of a corresponding distributional value.

Preferably, the memory position of the non-distributional value and the memory position of the corresponding distributional value are provided as key-value pairs.

Preferably, the runtime library contains further functions for accessing the uncertainty memory.

According to some embodiments, which can be combined with other embodiments described herein, the runtime library includes core library functions for the operations on the uncertainty information contained in the input data. In some embodiments, the core library implements arithmetic operations on distributions as well as other operations such as converting data into distributions and probing statistical properties of distributions.

According to some embodiments, which can be combined with other embodiments described herein, the runtime library includes internal functions acting as an intermediate layer between the transformation module and the core library functions.

According to some embodiments, which can be combined with other embodiments described herein, the transformation module is configured to generate calls to the internal functions, and the internal functions are configured to call the core library functions.

According to some embodiments, which can be combined with other embodiments described herein, an efficiency of the computer-implemented method is at least 1.5 times higher and/or at most 100000 times higher than an approach in which the transformation is performed using a processor emulator.

According to some embodiments, which can be combined with other embodiments described herein, the transforming of the first program representation to the second program representation is performed by a first computer system to generate the second program representation to be run on a second computer system different from the first computer system.

According to some embodiments, which can be combined with other embodiments described herein, the transforming of the first program representation to the second program representation is performed at runtime by a computer system to generate the second program representation to be run on the computer system.

According to another independent aspect of the present disclosure, a computer program is provided. The computer program has instructions which, when the program is executed by a computer, cause the computer to carry out the method for program augmentation according to the embodiments described in this document.

According to another independent aspect of the present disclosure, a computer-readable storage medium is provided. The computer-readable storage medium has instructions which, when the program is executed by a computer, cause the computer to carry out the method for program augmentation according to the embodiments described in this document.

Preferably, the computer-readable storage medium is a non-transitory computer-readable storage (or memory) medium. The term "non-transitory computer-readable storage (or memory) medium" includes, but is not limited to, magnetic or optical media, e.g., disks, hard drives, or DVDs/CD-ROMs, volatile or non-volatile media such as RAM (e.g., SDRAM, DDR, RDRAM, SRAM, etc.), ROM, etc. The non-transitory computer-readable storage (or memory) medium may include other types of non-transitory memory as well or combinations thereof.

According to another independent aspect of the present disclosure, a data processing system for program augmentation is provided. The data processing system includes one or more processors configured to transform a first program representation to a second program representation, the second program representation being configured to perform uncertainty tracking on uncertainty information contained in input data to be processed by the second program representation.

According to some embodiments, which can be combined with other embodiments described herein, transforming a first program representation to a second program representation includes passing an intermediate program representation, which is based on the first program representation, through a transformation module to generate the second program representation.

According to some embodiments, which can be combined with other embodiments described herein, the transformation module is configured to add uncertainty tracking functionalities to the intermediate program representation.

According to some embodiments, which can be combined with other embodiments described herein, the transformation module is configured to add the uncertainty tracking functionalities to the intermediate program representation at least by generating function calls to a runtime library containing functions for operations on the uncertainty information contained in the input data.

According to some embodiments, which can be combined with other embodiments described herein, the one or more processors of the data processing system are configured to perform the computer-implemented method for program augmentation according to the embodiments described in this document.

According to an independent aspect of the present disclosure, a computer-implemented method for program augmentation is provided. The method includes transforming, by one or more processors, a first program representation to a second program representation, the second program representation being configured to perform uncertainty tracking on uncertainty information contained in input data to be processed by the second program representation, wherein an efficiency of the computer-implemented method is at least 1.5 times higher and/or at most 100000 times higher than an approach in which the transformation is performed using a processor emulator.

According to an independent aspect of the present disclosure, a computer-implemented method for program augmentation is provided. An efficiency of the method is at least 1.5 times higher and/or at most 100000 times higher than an approach in which the transformation is performed using a (conventional) processor emulator.

According to some embodiments, which can be combined with other embodiments described herein, the efficiency of the computer-implemented method is at least 5 times higher, preferably 10 times higher, more preferably 100 times higher and/or at most 50000 times higher, preferably at most 10000 times higher, more preferably 1000 times higher.

### BRIEF DESCRIPTION OF THE DRAWINGS

So that the manner in which the above recited features of the present disclosure can be understood in detail, a more particular description of the disclosure, briefly summarized above, may be had by reference to embodiments. The accompanying drawings relate to embodiments of the disclosure and are described in the following:
- FIG. 1: illustrates a schematic view of a conventional processor unit;
- FIG. 2: illustrates a schematic view of a processor unit according to embodiments of the present disclosure;

- FIG. 3: illustrates a flow chart of a computer-implemented method for program augmentation according to embodiments of the present disclosure;
- FIG. 4: shows an exemplary process for program augmentation according to embodiments of the present disclosure;
- FIG. 5: illustrates a system for program augmentation according to embodiments of the present disclosure; and
- FIG. 6: illustrates another system for program augmentation according to embodiments of the present disclosure.

### DETAILED DESCRIPTION OF EMBODIMENTS

Reference will now be made in detail to the various embodiments of the disclosure, one or more examples of which are illustrated in the figures. Within the following description of the drawings, the same reference numbers refer to same components. Generally, only the differences with respect to individual embodiments are described. Each example is provided by way of explanation of the disclosure and is not meant as a limitation of the disclosure. Further, features illustrated or described as part of one embodiment can be used on or in conjunction with other embodiments to yield yet a further embodiment. It is intended that the description includes such modifications and variations.

This document includes references to "one embodiment" or "an embodiment". The appearances of the phrases "in one embodiment" or "in an embodiment" do not necessarily refer to the same embodiment. Particular features, structures, or characteristics may be combined in any suitable manner consistent with this disclosure.

The term "comprising" is open-ended. As used in the appended claims, this term does not foreclose additional structure or steps.

Various units, circuits, or other components may be described or claimed as "configured to" perform a task or tasks. In such contexts, "configured to" is used to connote structure by indicating that the units/circuits/components include structure (e.g., circuitry) that performs those task or tasks during operation. As such, the unit/circuit/component can be said to be configured to perform the task even when the specified unit/circuit/component is not currently operational (e.g., is not on). The units/circuits/components used with the "configured to" language include hardware for example, circuits, memory storing program instructions executable to implement the operation, etc. Additionally, "configured to" can include generic structure (e.g., generic circuitry) that is manipulated by software and/or firmware (e.g., an FPGA or a general-purpose processor executing software) to operate in manner that is capable of performing the task(s) at issue.

As used herein, the terms "first", "second", etc. are used as labels for nouns that they precede, and do not imply any type of ordering (e.g., spatial, temporal, logical, etc.).

As used herein, the term "based on" is used to describe one or more factors that affect a determination. This term does not foreclose additional factors that may affect a determination. That is, a determination may be solely based on those factors or based, at least in part, on those factors. Consider the phrase "determine A based on B." While in this case, B is a factor that affects the determination of A, such a phrase does not foreclose the determination of A from also being based on C. In other instances, A may be determined based solely on B.

As used herein, the term "uncertainty tracking" (or uncertainty propagation) is the process of monitoring how uncertainties in data affect the outputs of sequences of arithmetic operations that act on the data. For a given data item, such as a measurement, the term uncertainty quantification (UQ) is usually used to refer to the process of quantifying the uncertainty of that single data item.

The term "program representation" as used throughout the present disclosure refers to a representation of a program or software that can be automatically understood and analyzed when run on a processor.

The term "runtime library" as used throughout the present disclosure refers to a set of low-level routines used to invoke behaviors of a runtime environment.

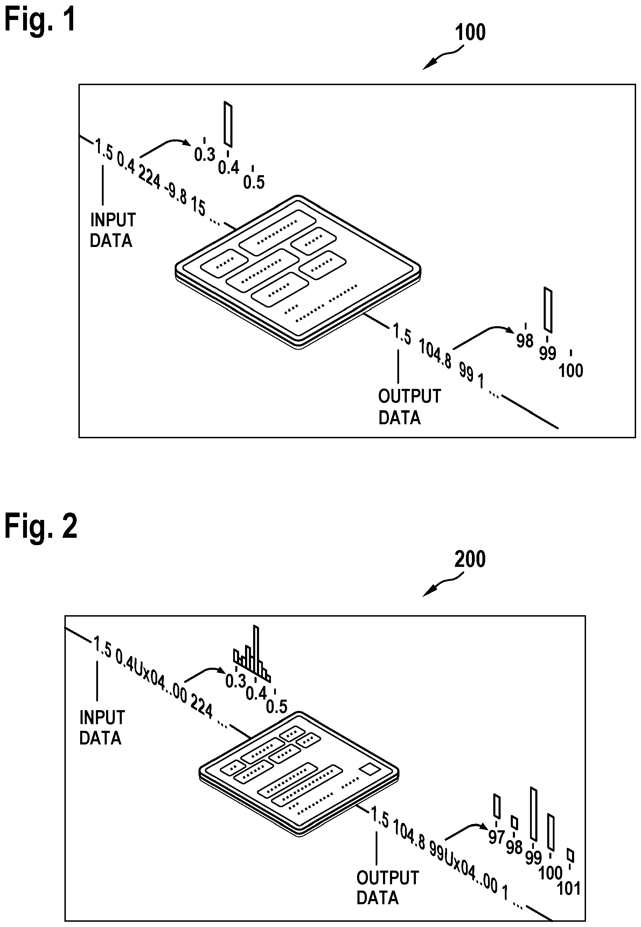

FIG. 1 illustrates a schematic view of a conventional processor unit 100.

A conventional processor unit 100 takes as input integer and floating-point values and performs operations (e.g., ADD, SUBSTRACT, MULTIPLY, XOR, etc.) on these data. The results of these operations are other integers or floating-point values.

Uncertainties in input data such as readings from sensors or stock market data are not uncommon, but the conventional processor unit 100 can only deal with integer and floating-point values which are certain and unambiguous. Therefore, the software running over the conventional processor unit 100 eliminates the uncertainties by averaging the variations across readings into a single number, to get the data into a form that the conventional processor unit 100 can handle, before feeding the averaged data into subsequent steps.

However, in many cases, the accuracy of the processing result is critical. For example, if an autonomous control algorithm of a driverless car must perform an emergency stop, the uncertainties in the sensor data may affect whether the emergency stop is performed in a safe manner. Because computers today can only perform calculations on numbers as opposed to being able to perform calculations on uncertainty distributions, the accuracy of the processing results may be insufficient, at least for some applications.

FIG. 2 illustrates a schematic view of a processor unit 200 according to embodiments of the present disclosure.

The processor unit 200 of the present disclosure can take in as input the same kinds of integer and floating-point values and perform the same kinds of operations (e.g., ADD, SUBSTRACT, MULTIPLY, XOR, etc.) as the conventional processor unit. In addition to that, the values taken as input include additional information about distributions associated with each value, and the processor unit 200 may also, in some embodiments, enable a number of additional operations that act on the distribution information (e.g., BAYESLAPLACE, DISTFROMSAMPLES, etc.).

Embodiments of program augmentation for implementing the uncertainty tracking technology on the processor unit 200 are described in detail below.

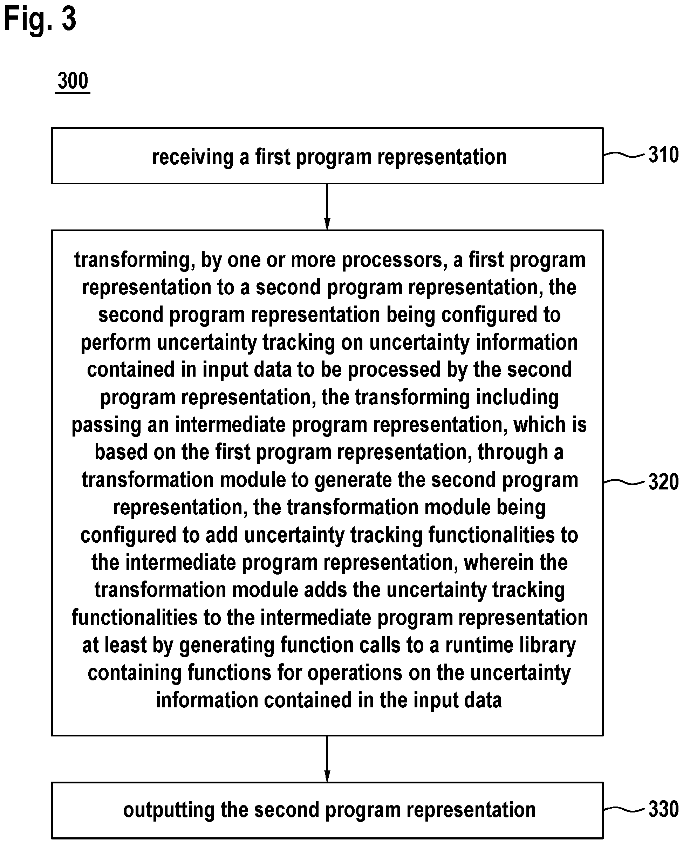

FIG. 3 illustrates a flow chart of a computer-implemented method 300 for program augmentation according to embodiments of the present disclosure.

In block 310, the method 300 includes receiving a first program representation (e.g., a source file in C).

In block 320, the method 300 includes transforming, by one or more processors, the first program representation to a second program representation, the second program representation being configured to perform uncertainty tracking on uncertainty information contained in input data to be processed by the second program representation.

The transforming includes passing an intermediate program representation, which is based on the first program representation, through a transformation module to generate the second program representation, the transformation module being configured to add uncertainty tracking functionalities to the intermediate program representation.

The transformation module adds the uncertainty tracking functionalities to the intermediate program representation at least by generating function calls to a runtime library containing functions for operations on the uncertainty information contained in the input data. In particular, the transformation module (e.g., an uncertainty transformation pass) is responsible for generating function calls to the runtime library and handle memory and operation semantics of each function call. The uncertainty tracking functionalities can include one or more operations. Preferably, the one or more operations are performed on distributional values. Preferably, the one or more operations include arithmetic operations, more preferably addition, subtraction, multiplication, division and/or exponentiation, or other such operations typically contained in the instruction set of a microprocessor. Preferably, uncertainty tracking functionalities include one or more operations performed on uncertainty information.

In block 330, the method 300 includes outputting the second program representation (e.g., an executable).

The method 300 transforms and augments the functionality of programs in one program representation, e.g., the LLVM intermediate representation (LLVM-IR), to programs in an equivalent representation and injects into the transformed program representation during the transformation process a capability to track probability distributions associated with the program state. Accordingly, the translation of the original program mimics the functionality of dedicated hardware that would otherwise be needed to track uncertainties in the original input program. In other words, the hardware translates the program to implement the component that would otherwise need to be implemented by the transforming processor itself in hardware.

The first program representation (input program, such as a source file in C) is first transformed to an intermediate program representation such as the LLVM-IR. Therefore, the transformation process can be used to generate programs that can run on a range of different processor types, particularly on any processor supported by tools that can work with the intermediate program representation.

Compared to implementations using dedicated hardware, the computer-implemented method 300 of the present disclosure can (i) provide better flexibility in a commercial deployment, such as reduced development time and reduced cost, (ii) provide easier upgrades which are valuable in a commercial setting, and (iii) allow in-the-field upgrades of functionality.

Furthermore, an efficiency of the computer-implemented method 300 is at least 1.5 times higher and/or at most 100000 times higher than an approach in which the transformation is performed using a processor emulator. A processor emulator is a program, which runs on top of a standard processor (e.g., a standard RISC processor (e.g., a SiFive P870/870A processor) or a standard CISC processor (e.g., an Intel Xeon w9-3475X Processor)), and which takes the instructions one by one and analyzes each instruction to carry out the operation of that instruction (e.g., addition, subtraction, etc.). For each such mimicking operation, it will require at least one instruction in the program (emulator) that is doing the mimicking, and typically at least two or more, resulting in the aforementioned higher efficiency of the computer-implemented method 300 of the present disclosure.

The embodiments of the present disclosure further allow additional functionality to be easily added in the dynamic translation process, as compared to using fixed hardware for the functionality that implements the translation and augmentation. Examples include, but are not limited to, improved methods for uncertainty tracking or new distribution representations and taking advantage of new hardware.

Further, the embodiments of the present disclosure allow additional transformations and optimizations for better performance. Examples include, but are not limited to, dead code elimination, dead argument elimination, dead store elimination, dead instruction elimination, dead global elimination, constant propagation, promote memory to register, combine redundant instructions, and simplify control flow graph.

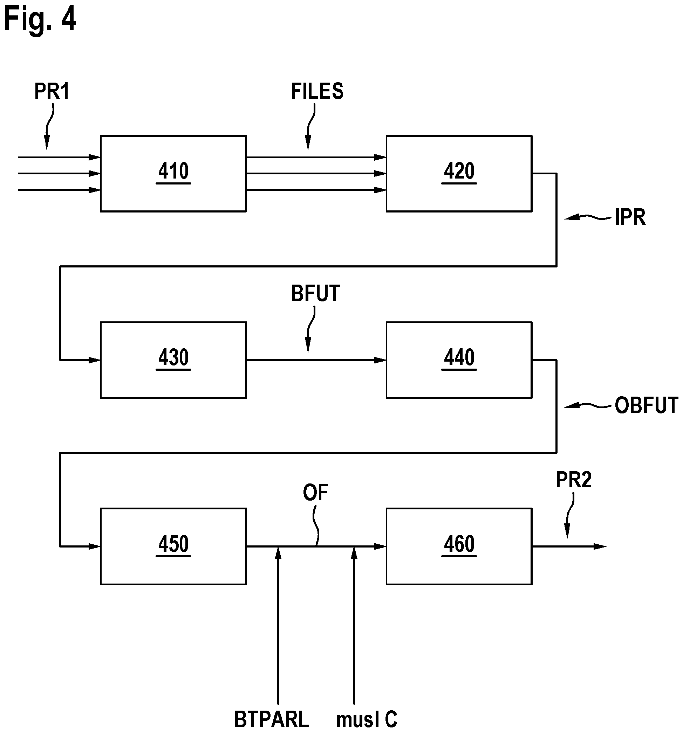

FIG. 4 shows an exemplary process for program augmentation according to embodiments of the present disclosure.

A first program representation PR1 is passed through a compiler front-end 410, e.g. a Clang compiler front-end, to create a plurality of LLVM IR bitcode files FILES. The first program representation PR1 can be a source file in C but is not limited thereto.

The plurality of LLVM IR bitcode files FILES are then linked to a single LLVM IR bitcode file using an LLVM bitcode linker 420 (llvm-link). The single LLVM IR bitcode file corresponds to an intermediate program representation IPR.

Then the intermediate program representation IPR (single LLVM IR bitcode file) is passed through the transformation module 430, which can be implemented in the form of an uncertainty transformation pass registered as a pass through LLVM's optimizer. This generates a bitcode file (or LLVM IR) BFUT that performs uncertainty tracking via calls to the runtime library, called the Binary Translation and Program Augmentation Runtime (BTPAR) Library.

This bitcode file BFUT can now pass again through at least one optimization module 440 to generate an optimized bitcode file OBFUT.

The optimized bitcode file OBFUT is then compiled to an object file OF using an LCC compiler 450. In other embodiments, the bitcode file BFUT can be compiled directly to the object file OF.

Finally, the object file OF is linked to the BTPAR library using a linker 460, and the second program representation PR2, which is an executable file, is created that can be executed natively on the specified target architecture. This executable will perform uncertainty tracking. In the final linking phase, a patched version of the musl C standard library can also be included. The patched version enables the scanning of textual representations of distributions.

In the following, a non-limiting example of the transformation module 430 implemented in the form of an uncertainty transformation pass and a BTPAR library are explained in detail.

### Uncertainty transformation pass

The uncertainty transformation pass can be an LLVM optimizer pass that transforms an LLVM IR by adding extra functionalities to specific LLVM IR operations to account for uncertainty tracking. For each LLVM IR value, a distributional value can be created which can be represented as a struct that holds all necessary information for a distribution (e.g., Dirac deltas, ancestors etc.). Each time an LLVM IR value is stored or loaded, its corresponding distributional value is also stored in a different struct called uncertain memory.

Uncertain memory saves key-value pairs of the memory position of the non-distributional value (e.g. a float) and the memory position of the corresponding distributional value. Those memory transactions are implemented by calls to specific functions of the BTPAR library (BTPARL). Also, for any other LLVM IR operation that needs to handle distributional values (e.g. addition), calls to BTPAR library are generated that handle that specific operation for the distributional values.

In general, the uncertainty transformation pass is responsible for generating function calls to the BTPAR library and handle memory and operation semantics of each function call. For functions that have distributional values as arguments, the original functions' signatures can be changed. In order to do so, during the compile time, for each argument of the original function that can have a distributional value, another distributional value pointer argument can be added to the function. This is done for all functions in a user's program that have distributional values as arguments. The function with the different number of arguments uses a different name (e.g., by appending the "_uncertain" string) and every call to the original function is changed to a call to the respective "_uncertain" function. There are some functions like libm functions or internal LLVM intrinsic functions that do not use this transformation. Instead, after the initial operation a call to their BTPART, internal implementation can be created.

### BTPAR library

The BTPAR library can have two distinct components: the internal functions and the core library functions. Core library functions are responsible for performing all the operations with distributional values (e.g., addition, subtraction, libm operations, etc.). Internal functions act as an intermediate layer between the uncertainty transformation pass and the core library. The uncertainty transformation pass actually generates calls to the internal functions, which have specific signatures known by the pass, and the internal functions call core library functions. Also, there can be a set of internal functions that handle the uncertain memory, a random number generator and other runtime features that are not covered in the core library.

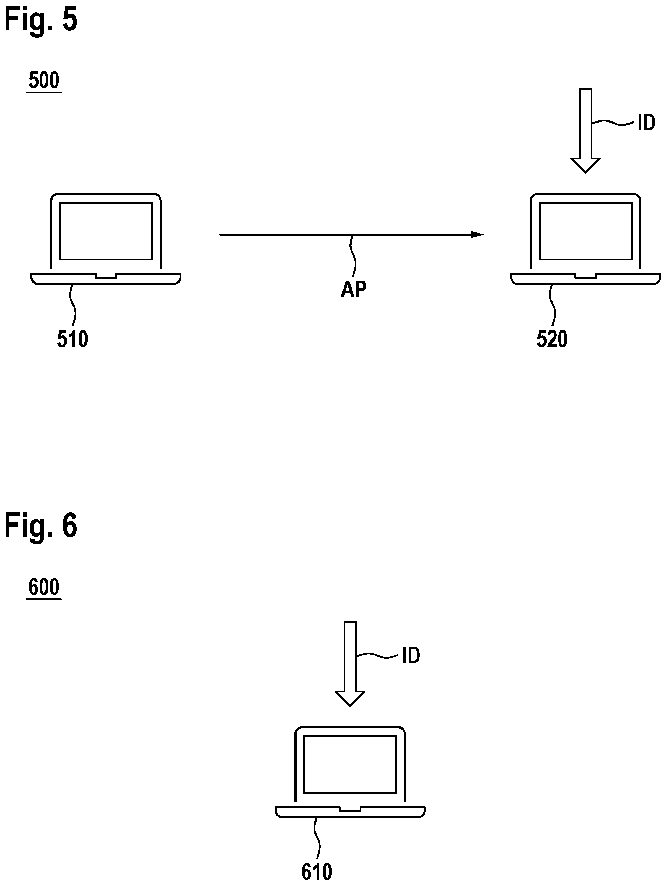

FIG. 5 illustrates a system 500 for program augmentation according to embodiments of the present disclosure.

In the example of FIG. 5, the transformation can be performed on a first computer 510 ("Host Workstation") to generate transformed programs to be run on a second computer 520 ("Target Processor").

The first computer 510 can be configured to execute the method for program augmentation of the present disclosure and can send the augmented program AP to the second computer 520. The first computer 510 and the second computer 520 may communicate via a transmission medium, such as a network. In one embodiment, the network is a mobile network. The transmission medium may use any of various wireless communication technologies, or telecommunication standards, such as GSM, UMTS, LTE, LTE-Advanced (LTE-A), 5G, HSPA, and the like.

The second computer 520 can be configured to perform uncertainty tracking on input data ID using the augmented program AP provided by the first computer 510. In some embodiments, the input data ID is based on a set of samples. The set of samples may be a set of empirical samples, such as a set of sensor readings. However, the present disclosure is not limited to empirical data, and the input data ID can be based on a general analytic distribution.

FIG. 6 illustrates a system 600 for program augmentation according to embodiments of the present disclosure.

In the example of FIG. 6, the transformation is performed at runtime within a microprocessor 610 of the system 600.

The present disclosure is not limited to the above embodiments, and the method steps of the present disclosure, for example as illustrated in FIG. 3, may be performed on a single device/system/platform or on a distributed system having multiple interconnected entities.

The methods described herein may be implemented in software, hardware, or a combination thereof, in different embodiments. In addition, the order of the blocks of the methods may be changed, and various elements may be added, reordered, combined, omitted, modified, etc. Various modifications and changes may be made as would be obvious to a person skilled in the art having the benefit of this disclosure. The various embodiments described herein are meant to be illustrative and not limiting. Many variations, modifications, additions, and improvements are possible. Accordingly, plural instances may be provided for components described herein as a single instance. Boundaries between various components, operations and data stores are somewhat arbitrary, and particular operations are illustrated in the context of specific illustrative configurations. Other allocations of functionality are envisioned and may fall within the scope of claims that follow. Finally, structures and functionality presented as discrete components in the example configurations may be implemented as a combined structure or component. These and other variations, modifications, additions, and improvements may fall within the scope of embodiments as defined in the claims that follow.

## Claims

1. A computer-implemented method for program augmentation, comprising:
transforming, by one or more processors, a first program representation to a second program representation, the second program representation being configured to perform uncertainty tracking on uncertainty information contained in input data to be processed by the second program representation, the transforming including:
passing an intermediate program representation, which is based on the first program representation, through a transformation module to generate the second program representation, the transformation module being configured to add uncertainty tracking functionalities to the intermediate program representation, wherein the transformation module adds the uncertainty tracking functionalities to the intermediate program representation at least by generating function calls to a runtime library containing functions for operations on the uncertainty information contained in the input data.

2. A computer-implemented method of claim 1, wherein the transformation module is configured to generate a bitcode file when adding the uncertainty tracking functionalities to the intermediate program representation.

3. A computer-implemented method of claim 1 or 2, further comprising:
transforming the first program representation to the intermediate program representation using a compiler, wherein the compiler generates a plurality of files from the first program representation, and all of the plurality of files are linked to a single file corresponding to the intermediate program representation.

4. A computer-implemented method of claim 3, wherein the compiler includes or is based on:
- a Low Level Virtual Machine, LLVM, and the single file is a single LLVM file, in particular a single LLVM IR file, or
- Multi-Level Intermediate Representation, MLIR, or
- GNU Compiler Collection GIMPLE, GCC GIMPLE, or
- GNU Compiler Collection Register Transfer Language, GCC RTL, or
- an assembly language.

5. A computer-implemented method of any one of claims 1 to 4, wherein the transformation module is provided as an LLVM transformation pass.

6. A computer-implemented method of claim 5, wherein the LLVM transformation pass transforms LLVM IR by adding the uncertainty tracking functionalities to the LLVM IR to account for uncertainty tracking of the input data.

7. A computer-implemented method of any one of claims 1 to 6, further including: generating an uncertainty memory containing memory information about uncertainty distributions, wherein the memory information includes a memory position of a non-distributional value and a memory position of a corresponding distributional value, in particular wherein the memory position of the non-distributional value and the memory position of the corresponding distributional value are provided as key-value pairs.

8. A computer-implemented method of claim 7, wherein the runtime library contains further functions for accessing the uncertainty memory.

9. A computer-implemented method of any one of claims 1 to 8, wherein the runtime library includes:
- core library functions for the operations on the uncertainty information contained in the input data and/or
- internal functions acting as an intermediate layer between the transformation module and the core library functions.

10. A computer-implemented method of claim 9, wherein the transformation module is configured to generate calls to the internal functions, and the internal functions are configured to call the core library functions.

11. A computer-implemented method of any one of claims 1 to 10, wherein an efficiency of the computer-implemented method is at least 1.5 times higher and/or at most 100000 times higher than an approach in which the transformation is performed using a processor emulator.

12. A computer-implemented method of any one of claims 1 to 11, wherein:
- the transforming of the first program representation to the second program representation is performed by a first computer system to generate the second program representation to be run on a second computer system different from the first computer system, or
- the transforming of the first program representation to the second program representation is performed at runtime by a computer system to generate the second program representation to be run on the computer system.

13. A computer program comprising instructions which, when the program is executed by a computer, cause the computer to carry out the method of any one of claims 1 to 12.

14. A computer-readable storage medium comprising instructions which, when the program is executed by a computer, cause the computer to carry out the method of any one of claims 1 to 12.

15. A data processing system for program augmentation, comprising one or more processors configured to:
transform a first program representation to a second program representation, the second program representation being configured to perform uncertainty tracking on uncertainty information contained in input data to be processed by the second program representation, the transforming including:
passing an intermediate program representation, which is based on the first program representation, through a transformation module to generate the second program representation, the transformation module being configured to add uncertainty tracking functionalities to the intermediate program representation, wherein the transformation module adds the uncertainty tracking functionalities to the intermediate program representation at least by generating function calls to a runtime library containing functions for operations on the uncertainty information contained in the input data.
